# EUROPEAN PATENT APPLICATION

(11) **EP 4 404 146 A1**
(43) Date of publication of application: **24.07.2024**
(21) Application number: 22894497.1
(22) Date of filing: 30.09.2022
(51) Int. Cl.: G06T 15/20, G06T 7/90

(54) **IMAGE SYNTHESIS METHOD AND APPARATUS, ELECTRONIC DEVICE AND COMPUTER-READABLE STORAGE MEDIUM**

(30) Priority: 22.11.2021 CN 202111382721; 29.01.2022 CN 202210113100
(71) Applicant: Huawei Technologies Co., Ltd., Shenzhen, Guangdong 518129 (CN)
(72) Inventor: FAN, Yanping, Shenzhen, Guangdong 518129 (CN); CHEN, Xianyi, Shenzhen, Guangdong 518129 (CN)
(74) Representative: Maiwald GmbH
(86) International application number: PCT/CN2022/123493
(87) International publication number: WO 2023/087959

(57) **Abstract**

Embodiments of this application provide an image synthesizing method and apparatus, an electronic device, and a computer-readable storage medium. The image synthesizing method includes: determining a posture of a first object in an image and a relative position relationship between the first object and a second object in the image; determining, based on the posture and the relative position relationship, a foreground component included in a virtual scene; and synthesizing an image of the virtual scene based on the foreground component, an image part including the first object, and the relative position relationship. In embodiments of this application, an original scene is constructed by using the foreground component, so that the synthesized image of the virtual scene is more realistic, and user experience is improved.

## Description

### TECHNICAL FIELD

Embodiments of this application mainly relate to the field of computer technologies, and more specifically, to an image processing technology. Embodiments of this application provide an image synthesizing method and apparatus, an electronic device, a computer-readable storage medium, and a computer program product.

### BACKGROUND

In recent years, a video conference is increasingly used for, for example, work from home, online education, and a remote conference. However, the video conference may display an environment that a user does not want to be seen by others. To better protect user privacy and improve user experience, much videoconferencing software provides a virtual background function, to avoid a problem that a home environment is not formal or personal privacy information is exposed while creating a learning and office environment. In addition, in some formal conference scenes, a conference background needs to be set in a unified manner for publicity. In this case, the virtual background function is also selected.

A virtual background depends on a portrait segmentation technology, and is implemented by segmenting a portrait in an image and synthesizing the portrait with an expected background. However, an effect of a virtual scene image obtained through synthesis in this manner is poor.

### SUMMARY

Embodiments of this application provide a technical solution for synthesizing a virtual scene.

According to a first aspect of this application, an image synthesizing method is provided. The method includes: determining a posture of a first object in an image and a relative position relationship between the first object and a second object in the image; determining, based on the posture and the relative position relationship, a foreground component included in a virtual scene; and synthesizing an image of the virtual scene based on the foreground component, an image part including the first object, and the relative position relationship. In this manner, the image of the virtual scene is synthesized by introducing the foreground component and considering a mutual relationship between objects in an original image. Therefore, the synthesized image of the virtual scene is more realistic, to improve user experience.

In some embodiments of the first aspect, the method may further include: extracting, from an image including the first object and the second object, the image part including the first object. In some embodiments, extracting the image part including the first object may include: adjusting a size of the image to match an input size of an image segmentation model; generating a mask image from an adjusted image by using the image segmentation model; adjusting a size of the mask image to match the image including the first object and the second object; and extracting the image part including the first object using an adjusted mask image. In this manner, a desired object, for example, a person in the image, may be obtained from the original image through segmentation by using a lightweight model, and efficiency and a speed of image segmentation can be improved.

In some embodiments of the first aspect, the determining a posture of the first object in the image may include: detecting a plurality of key points of the first object; and determining the posture of the first object based on a relative position between the plurality of key points. In this manner, the posture of the object can be determined stably and efficiently for selecting the suitable foreground component.

In some embodiments of the first aspect, the method may further include: determining an area of the second object in the image by performing semantic segmentation on an image that includes the second object but does not include the first object. In this manner, environment information in the original image may be obtained in advance as learned knowledge, and does not need to be segmented in real time as the first object, to improve efficiency of synthesizing the image of the virtual scene.

In some embodiments of the first aspect, the determining a relative position relationship between the first object and a second object may include: determining the relative position relationship between the first object and the second object based on coordinate information of an area of the first object in the image and coordinate information of the area of the second object in the image. In this manner, the relative position relationship between the first object and the second object may be simply and efficiently determined, for example, a spatial relationship between the first object and the second object, whether the first object and the second object are in contact (that is, there is a supporting relationship), and an occlusion relationship.

In some embodiments of the first aspect, the determining a foreground component included in a virtual scene may include: selecting, based on a relative size of the first object and the second object in the image, the foreground component whose size matches the first object. In this manner, a foreground component of an appropriate size may be selected from a virtual scene resource library, so that the synthesized image of the virtual scene is more coordinated, more realistic, to improve user experience.

In some embodiments of the first aspect, the relative position relationship may further include an occlusion relationship between the first object and the second object. The synthesizing an image of the virtual scene may include synthesizing the image of the virtual scene by enabling the first object and the foreground component to satisfy the occlusion relationship. In this manner, in the synthesized image of the virtual scene, the occlusion relationship between the foreground component and the first object is consistent with that of the first object and the second object in the original image. In other words, the foreground component is arranged to have a visual effect consistent with that of the second object in the original image. In this way, the synthesized image of the virtual scene is more coordinated, more realistic, to improve user experience.

In some embodiments of the first aspect, when a position of the first object in a background is updated, and an updated position of the first object and a position of the foreground component enable the first object and the foreground component not to satisfy the occlusion relationship, the foreground component included in the virtual scene is updated, and the image of the virtual scene is synthesized based on an updated foreground component, the image part including the first object, and the relative position relationship. In some embodiments, that the foreground component included in the virtual scene is updated may include: adding another foreground component, where the another foreground component and the first object satisfy the occlusion relationship. Alternatively or additionally, that the foreground component included in the virtual scene is updated may further include: modifying a size of the foreground component, so that a modified foreground component and the first object satisfy the occlusion relationship. In this manner, when the first object moves and the image of the virtual scene is not coordinated, the foreground component may be adjusted to restore the original occlusion relationship, so that the synthesized image of the virtual scene remains realistic.

In some embodiments of the first aspect, when a position of the first object in a background is updated, and an updated position of the first object and a position of the foreground component enable the first object and the foreground component not to satisfy the occlusion relationship, a camera that captures the image is indicated to photograph the first object in a close-up manner, and the image of the virtual scene is synthesized based on the image part including the first object photographed in the close-up manner. In this manner, in the image of the virtual scene, the first object may be presented in a more coordinated and aesthetic manner. For example, when the first object includes an upper body of a person, the upper body captured in a close-up manner may occupy a picture of the virtual scene much, and a sense of incoordination that an upper body image is suspended in the air is not generated.

In some embodiments of the first aspect, when a position of the first object in a background is updated, and an updated position of the first object and a position of the foreground component enable the first object and the foreground component not to satisfy the occlusion relationship, the position of the foreground component is adjusted, to enable an adjusted foreground component and the first object to satisfy the occlusion relationship. In this manner, when the first object moves and the image of the virtual scene is not coordinated, the foreground component may be adjusted to restore the original occlusion relationship, so that the synthesized image of the virtual scene remains realistic.

In some embodiments of the first aspect, the first object may be a person or a virtual image, and the second object may be a static object. In this manner, the method according to the first aspect may be applied to a video conference scene, or any other image processing application including an active object and a static object.

According to a second aspect of this application, an image synthesizing method is provided. The method includes: extracting an image part including a first object from an original video stream; synthesizing a first video stream of a virtual scene based on a first background of the virtual scene and the image part including the first object; and when a change of the first object in the first video stream satisfies a preset condition, synthesizing a second video stream of the virtual scene based on a second background of the virtual scene. In this manner, when the video stream of the virtual scene is synthesized based on a video stream of a real scene, a background of the virtual scene can be dynamically changed to adapt to a dynamic change of an object in the real scene, to obtain a high-quality video stream of the virtual scene.

In some embodiments of the second aspect, the synthesizing a second video stream of the virtual scene based on a second background of the virtual scene in response to a case in which a change of the first object in the first video stream satisfies a preset condition may include: synthesizing the second video stream based on the second background as extension of the first background when it is detected in the first video stream that a position of the first object is close to a boundary of the first background. In this manner, the background may continuously change for extension with movement of a person in the virtual scene, to achieve an effect that the background changes as the person moves, similar to that in a real world, and improve user experience.

In some embodiments of the second aspect, when it is determined that another object in the first video stream cannot be included in the second background, the second video stream is synthesized based on a third background obtained by combining the first background and the second background. In some embodiments, the combining the first background and the second background may include combining the first background and the second background in a splicing manner. Alternatively or additionally, the obtained background may also seem more harmonious and aesthetic in a splicing and cropping manner. In this manner, even if the background is changed as the object moves, all important objects in the real scene may be included in a changed picture, and the important objects are not omitted from the picture.

In some embodiments of the second aspect, the synthesizing a second video stream of the virtual scene based on a second background of the virtual scene in response to a case in which a change of the first object in the first video stream satisfies a preset condition may include: synthesizing the second video stream by using the second background that matches a changed photographing angle, when a photographing angle of a camera that captures the original video stream changes and a change of the first object in the first video stream is caused. In this manner, in an application scene such as switching a view angle of a navigation lens, the background of the virtual scene may also be dynamically changed to a background matching the view angle of the lens, in other words, the background may be changed to a picture "viewed" in a direction of a changed view angle, to achieve a visual effect as if the picture is viewed in a real scene, and improve user experience.

In some embodiments of the second aspect, the synthesizing a second video stream of the virtual scene based on a second background of the virtual scene in response to a case in which a change of the first object in the first video stream satisfies a preset condition may include: synthesizing the second video stream based on the second background when a camera that captures the original video stream photographs the first object in a close-up manner and that the first object in the first video stream becomes larger is caused, where the second background is a part of the first background and has higher resolution than that of the first background. In this manner, a problem of poor image quality after the background of the virtual scene is enlarged during close-up photographing of the camera can be alleviated or eliminated.

According to a third aspect of this application, an image processing apparatus is provided. The apparatus includes: a posture determining unit, a position relationship determining unit, a foreground component determining unit, and a synthesizing unit. The posture determining unit is configured to determine a posture of a first object in an image. The position relationship determining unit is configured to determine a relative position relationship between the first object and the second object in the image. The foreground component determining unit is configured to determine, based on the posture and the relative position relationship, a foreground component included in a virtual scene. The synthesizing unit is configured to synthesize an image of the virtual scene based on the foreground component, an image part including the first object, and the relative position relationship. In this manner, the image of the virtual scene is synthesized by introducing the foreground component and considering a mutual relationship between objects in an original image. Therefore, the synthesized image of the virtual scene is more realistic, to improve user experience.

In some embodiments of the third aspect, the apparatus may further include a segmentation unit. The segmentation unit is configured to extract, from the image including the first object and the second object, the image part including the first object. In some embodiments, the segmentation unit may also be configured to adjust a size of the image to match an input size of an image segmentation model; generate a mask image from an adjusted image by using the image segmentation model; adjust a size of the mask image to match the image including the first object and the second object; and extract the image part including the first object by using an adjusted mask image. In this manner, a desired object, for example, a person in the image, may be obtained from the original image through segmentation by using a lightweight model, and efficiency and a speed of image segmentation can be improved.

In some embodiments of the third aspect, the posture determining unit may be further configured to: detect a plurality of key points of the first object; and determine the posture of the first object based on a relative position between the plurality of key points. In this manner, the posture of the object can be determined stably and efficiently for selecting the suitable foreground component.

In some embodiments of the third aspect, the apparatus according to the third aspect may further include a semantic segmentation unit. The semantic segmentation unit may be configured to determine an area of the second object in the image by performing semantic segmentation on an image that includes the second object but does not include the first object. In this manner, environment information in the original image may be obtained in advance as learned knowledge, and does not need to be segmented in real time as the first object, to improve efficiency of synthesizing the image of the virtual scene.

In some embodiments of the third aspect, the position relationship determining unit may be further configured to: determine the relative position relationship between the first object and the second object based on coordinate information of an area of the first object in the image and coordinate information of the area of the second object in the image. In this manner, the relative position relationship between the first object and the second object may be simply and efficiently determined, for example, a spatial relationship between the first object and the second object, whether the first object and the second object are in contact (that is, there is a supporting relationship), and an occlusion relationship.

In some embodiments of the third aspect, the foreground component determining unit may be further configured to select, based on a relative size of the first object and the second object in the image, the foreground component whose size matches the first object. In this manner, a foreground component of an appropriate size may be selected from a virtual scene resource library, so that the synthesized image of the virtual scene is more coordinated, more realistic, to improve user experience.

In some embodiments of the third aspect, the relative position relationship may further include an occlusion relationship between the first object and the second object. The synthesizing unit may be further configured to synthesize the image of the virtual scene by enabling the first object and the foreground component to satisfy the occlusion relationship. In this manner, in the synthesized image of the virtual scene, the occlusion relationship between the foreground component and the first object is consistent with that of the first object and the second object in the original image. In other words, the foreground component is arranged to have a visual effect consistent with that of the second object in the original image. In this way, the synthesized image of the virtual scene is more coordinated, more realistic, to improve user experience.

In some embodiments of the third aspect, when a position of the first object in a background is updated, and an updated position of the first object and a position of the foreground component enable the first object and the foreground component not to satisfy the occlusion relationship, the synthesizing unit may be further configured to update the foreground component included in the virtual scene, and synthesize the image of the virtual scene based on an updated foreground component, the image part including the first object, and the relative position relationship. In some embodiments, the synthesizing unit may be further configured to add another foreground component to the image of the virtual scene, where the another foreground component and the first object satisfy the occlusion relationship. Alternatively or additionally, the synthesizing unit may be further configured to modify a size of the foreground component, so that a modified foreground component and the first object satisfy the occlusion relationship. In this manner, when the first object moves and the image of the virtual scene is not coordinated, the foreground component may be adjusted to restore the original occlusion relationship, so that the synthesized image of the virtual scene remains realistic.

In some embodiments of the third aspect, when a position of the first object in a background is updated, and an updated position of the first object and a position of the foreground component enable the first object and the foreground component not to satisfy the occlusion relationship, the synthesizing unit may be further configured to indicate a camera that captures the image to photograph the first object in a close-up manner, and synthesize the image of the virtual scene based on the image part including the first object photographed in the close-up manner. In this manner, in the image of the virtual scene, the first object may be presented in a more coordinated and aesthetic manner. For example, when the first object includes an upper body of a person, the upper body captured in a close-up manner may occupy a picture of a virtual scene much, and a sense of incoordination that an upper body image is suspended in the air is not generated.

In some embodiments of the third aspect, when a position of the first object in a background is updated, and an updated position of the first object and a position of the foreground component enable the first object and the foreground component not to satisfy the occlusion relationship, the synthesizing unit may be further configured to adjust the position of the foreground component, to enable an adjusted foreground component and the first object to satisfy the occlusion relationship. In this manner, when the first object moves and the image of the virtual scene is not coordinated, the foreground component may be adjusted to restore the original occlusion relationship, so that the synthesized image of the virtual scene remains realistic.

In some embodiments of the third aspect, the first object may be a person or a virtual image, and the second object may be a static object. In this manner, the method according to the first aspect may be applied to a video conference scene, or any other image processing application including an active object and a static object.

According to a fourth aspect of this application, an image synthesizing apparatus is provided. The apparatus includes a segmentation unit, a synthesizing unit, and a detection unit. The segmentation unit is configured to extract, from an original video stream, an image part including a first object. The synthesizing unit is configured to synthesize a first video stream of a virtual scene based on a first background of the virtual scene and the image part including the first object, and when a change of the first object in the first video stream satisfies a preset condition, synthesize a second video stream of the virtual scene based on a second background of the virtual scene. In this manner, when the video stream of the virtual scene is synthesized based on a video stream of a real scene, a background of the virtual scene can be dynamically changed to adapt to a dynamic change of an object in the real scene, to obtain a high-quality video stream of the virtual scene.

In some embodiments of the fourth aspect, the apparatus may further include the detection unit. The detection unit is configured to detect, in the first video stream, that a position of the first object is close to a boundary of the first background. The synthesizing unit may be further configured to synthesize the second video stream based on the second background as extension of the first background. In this manner, the background may continuously change for extension with movement of a person in the virtual scene, to achieve an effect that the background changes as the person moves, similar to that in a real world, and improve user experience.

In some embodiments of the fourth aspect, the detection unit may be further configured to determine that another object in the first video stream cannot be included in the second background. The synthesizing unit may further be configured to synthesize the second video stream based on a third background obtained by combining the first background and the second background. In some embodiments, the combining the first background and the second background may include combining the first background and the second background in a splicing manner. Alternatively or additionally, the obtained background may also seem more harmonious and aesthetic in a splicing and cropping manner. In this manner, even if the background is changed as the object moves, all important objects in the real scene may be included in a changed picture, and the important objects are not omitted from the picture.

In some embodiments of the fourth aspect, the detection unit may be further configured to determine that a photographing angle of a camera that captures the original video stream changes, where the change of the photographing angle causes a change of the first object in the first video stream. The synthesizing unit may further be configured to synthesize the second video stream by using the second background that matches a changed photographing angle. In this manner, in an application scene such as switching a view angle of a navigation lens, the background of the virtual scene may also be dynamically changed to a background matching the view angle of the lens, in other words, the background may be changed to a picture "viewed" in a direction of a changed view angle, to achieve a visual effect as if the picture is viewed in a real scene, and improve user experience.

In some embodiments of the fourth aspect, the detection unit may be further configured to determine that a camera that captures the original video stream photographs the first object in a close-up manner. The first object in the first video stream becomes larger because the first object is photographed in the close-up manner. The synthesizing unit may be configured to synthesize the second video stream based on the second background, where the second background is a part of the first background and has higher resolution than that of the first background. In this manner, a problem of poor image quality after the background of the virtual scene is enlarged during close-up photographing of the camera can be alleviated or eliminated.

According to a fifth aspect of this application, an electronic device is provided. The electronic device includes a processing unit and a memory, and the processing unit executes instructions in the memory, to enable the electronic device to perform the method according to the first aspect or the second aspect of this application.

According to a sixth aspectof this application, a computer-readable storage medium is provided, where the computer-readable storage medium stores one or more computer instructions, and the one or more computer instructions are executed by a processor to enable the processor to perform the method according to the first aspect or the second aspect of this application.

According to a seventh aspect of this application, a computer program product is provided, including machine executable instructions. When the machine executable instructions are executed by a device, the device is enabled to perform the method according to the first aspect or the second aspect of this application.

### BRIEF DESCRIPTION OF DRAWINGS

The foregoing and other features, advantages, and aspects of embodiments of this application become more obvious with reference to the accompanying drawings and with reference to the following detailed descriptions. In the accompanying drawings, same or similar reference numerals represent same or similar elements.
FIG. 1 is a schematic diagram of an example environment in which a plurality of embodiments of this application can be implemented;
FIG. 2 is a schematic diagram of another example environment in which a plurality of embodiments of this application can be implemented;
FIG. 3 is a schematic diagram of a system for synthesizing a conference virtual scene according to some embodiments of this application;
FIG. 4 is a schematic flowchart of an image processing method according to some embodiments of this application;
FIG. 5 is a schematic diagram of a process of extracting an image part including a person according to some embodiments of this application;
FIG. 6 is a schematic diagram of a process of determining a posture of a person according to some embodiments of this application;
FIG. 7A to FIG. 7C are a schematic diagram of a person moving in a virtual scene according to some embodiments of this application;
FIG. 8 is a schematic flowchart of another image processing method according to some embodiments of this application;
FIG. 9A and FIG. 9B are a schematic diagram of a person moving in a synthesized image according to some embodiments of this application;
FIG. 10 is a schematic block diagram of an image processing apparatus according to some embodiments of this application;
FIG. 11 is a schematic block diagram of another image processing apparatus according to some embodiments of this application; and
FIG. 12 is a schematic block diagram of an example device that may be used to implement an embodiment of this application.

### DESCRIPTION OF EMBODIMENTS

The following describes embodiments of this application in detail with reference to the accompanying drawings. Although some embodiments of this application are shown in the accompanying drawings, it should be understood that this application may be implemented in various forms, and should not be construed as being limited to the embodiments described herein. On the contrary, rather, these embodiments are provided, so that this application will be more thoroughly and completely understood. It should be understood that the accompanying drawings and embodiments of this application are merely used as examples, but are not intended to limit the protection scope of this application.

In the descriptions of embodiments of this application, the term "include" and similar terms thereof should be understood as open inclusion, that is, "include but not limited to". The term "based" should be understood as "at least partially based". The terms "one embodiment" or "the embodiment" should be understood as "at least one embodiment". The terms "first", "second", and the like may indicate different or same objects. Other explicit and implicit definitions may also be included below. To make this application clearer and more comprehensive, the following terms are provided.

During online video conference application, to protect personal privacy or for a purpose of aesthetics or publicity, some video application service providers already provide a virtual scene for a user, for example, an environment obtained by simulating a real world or by using virtual design. By using a portrait segmentation technology, an image of a person is segmented from a video stream or an image in an original scene that is captured by a camera, and then the image of the person and a pre-selected background are fused together to synthesize an image of the virtual scene.

However, because the person may have various postures (for example, standing, relying, and sitting) in the original scene, and there are various relative position relationships (for example, contact, occlusion, and separation) between the person and other objects in the environment, it is not enough to generate the virtual scene only by replacing a background. For example, the person sits in the original scene and is occluded by a table in front of the person. In this case, replacing only the background in the original scene cannot satisfy a requirement of simulating the virtual scene. When an upper body image of the person and the background are directly used for fusion, the obtained synthesized image is unreal, and user experience is poor. In addition, a case in which the person may move in the environment is not considered in an existing solution. When the person changes in the synthesized image of the virtual scene, a problem of unreality or quality deterioration of the image exists.

In view of this, a technical solution for synthesizing a virtual scene of a video conference is provided. In the technical solution, a relationship between a person and an object in an original scene is considered, and a foreground component of the virtual scene is provided to synthesize an image of the virtual scene. According to an embodiment of this application, an image synthesizing method is provided. According to the method, an image of a participant is first extracted from a captured original image through image segmentation, where the original image includes a person and various objects in an environment. Then, a posture of the person is determined based on the image of the participant, for example, a standing posture, a sitting posture, or whether there is a support. The method further includes determining a relative position relationship between the person and the object based on an area occupied by the person in the original image and an area occupied by the object in the environment in the original image. Then, a foreground component to be arranged in a virtual scene may be selected or determined based on the posture of the person and the relative position relationship between the person and the object. The method further includes synthesizing an image of the virtual scene based on the foreground component, the image of the participant obtained through segmentation, and the relative position relationship between the person and the object in the original scene. In this manner, the foreground component is introduced to synthesize the image of the virtual scene, and the synthesized image of the virtual scene is more realistic, to improve user experience.

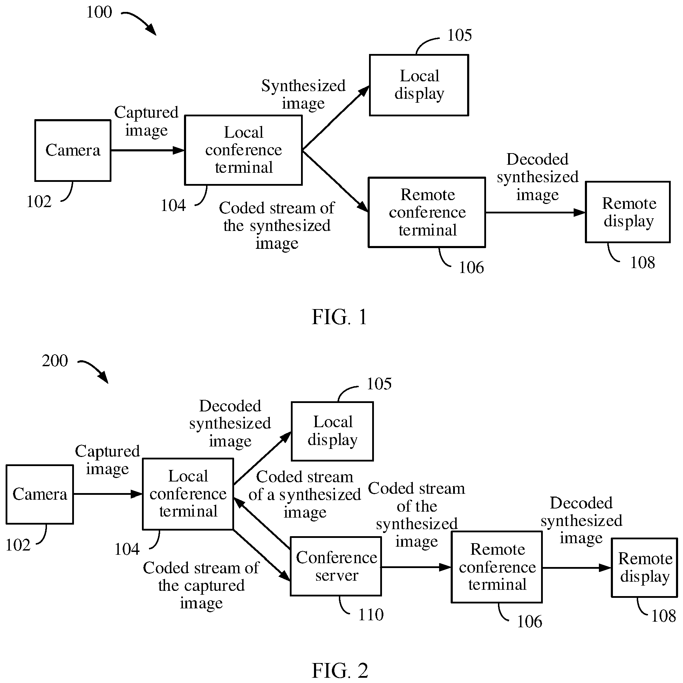

The following describes embodiments of this application with reference to FIG. 1 to FIG. 12.

### Example environment

FIG. 1 is a schematic diagram of an example environment 100 in which a plurality of embodiments of this application can be implemented. In the environment 100, a camera 102, a local conference terminal 104, and a local display 105 are located locally to a user, and the user may participate in an online video conference by using the camera 102 and the local conference terminal 104. The local conference terminal 104 may be connected, through a network, to another conference terminal, namely, a remote conference terminal 106, that is geographically far away. The remote conference terminal 106 and a remote display 108 may be used by another user to participate in the online video conference. A real-time image of the user is captured by using the camera 102, and the local user may be seen by the another remote user. In addition, optionally, the another user may also use a camera, so that the users can see each other.

In the environment 100, the camera 102, the local conference terminal 104, and the local display 105 may be independent devices. For example, the camera 102 may be an independent camera, the local conference terminal 104 may be an electronic device that can run an online video conference application, and the local display 105 may be an independent display (for example, an LCD display or an LED display) or a projector. Alternatively, the camera 102, the local conference terminal 104, and the local display 105 may alternatively be integrated into a same electronic device. Similarly, the remote conference terminal 106 and the remote display 108 may alternatively be independent devices or integrated in a same electronic device.

Components of the electronic device may include but are not limited to one or more processors or processing units, a memory, a storage device, one or more communication units, one or more input devices, and one or more output devices. In some embodiments, the electronic device may be a device such as a mobile phone, a tablet computer, a video phone, a laptop computer (laptop), a notebook computer, a personal computer (PC), a cellular phone, a personal digital assistant (PDA), or an augmented reality (AR)/virtual reality (VR) device. In some embodiments, electronic devices may be connected to each other or connected to a conference server (not shown) by using various types of wired (for example, a fiber or a cable) or wireless communication (for example, Wi-Fi or a cellular network) manners.

As shown in the figure, the camera 102 may capture an image of an original scene in which the user is located, and the image of the original scene includes one or more persons, and may further include an object in a surrounding environment. The captured image may be sent to the local conference terminal 104 in real time. In the environment shown in FIG. 1, the local conference terminal 104 may obtain the original image from the camera, and synthesize an image of a virtual scene based on the original image. In some embodiments, the local conference terminal 104 segments an image of the person from the original image, and then synthesizes the image by using the image of the person and a component (including a background and a foreground component) of the virtual scene.

In this specification, the background refers to a layer that is at the bottom in the image and that is used to construct the virtual scene. In some embodiments, one virtual scene may have several backgrounds, and the background may have attributes such as a size, resolution, and a view angle. In this specification, the image of the person is an image that is obtained through segmentation along a contour line of the person in the image and that is distinguished from an environment in which the person is located. In the synthesized image of the virtual scene, an appropriate position and an appropriate layer may be set for the image of the person. In this specification, the foreground component refers to a virtual object that may be arranged in a virtual environment, and may have attributes such as a size (for example, a length, a width, and a height), a color, and a material. When the foreground component is arranged in the virtual scene, an appropriate position, a rotation angle (for example, determined based on a view angle), a layer in the virtual scene, and the like may be set for the foreground component.

In some embodiments, the synthesized image may be sent to the local display 105 for presentation to the user, so that the user may interact to adjust the synthesized image. In some embodiments, the local conference terminal 104 may further code the synthesized image into a coded stream by using a video codec, and send the coded stream of the synthesized image to the remote conference terminal 106. The remote conference terminal 106 may decode the received coded stream, and then provide the decoded synthesized image for the remote display 108 for display to the another user. In this way, the another user in the distance can see the synthesized image in the virtual scene.

FIG. 2 is a schematic diagram of another example environment 200 in which a plurality of embodiments of this application can be implemented. In the environment 200, an image of a virtual scene is synthesized by using a conference server 110 instead of a local conference terminal 104.

In the environment 200, the conference server 110 may include but is not limited to one or more processors or processing units, a memory, a storage device, one or more communication units, one or more input devices, and one or more output devices. These components can be set in a form of a cloud computing architecture. In the cloud computing architecture, these components may be remotely arranged, and may work together to implement functions described in embodiments of this application. In some implementations, cloud computing provides computing, software, data access, and storage services that do not require an end user to learn a physical position or configuration of a system or hardware that provides these services. In various implementations, the cloud computing uses an appropriate protocol to provide services through a wide area network (such as the Internet), such as an online video conference application, and the services can be accessed by using a web browser or any other computing component (such as a mobile application).

In the environment 200, the local conference terminal 104 receives a captured image from a camera 102, codes a captured original image into a coded stream by using a video codec, and sends the coded stream to the conference server 110. The conference server 110 decodes the coded stream to obtain the original image, and synthesizes the image of the virtual scene based on the original image. Then, the conference server 110 may code the synthesized image into a coded stream, and send the coded stream to the local conference terminal 104 and a remote conference terminal 106. The local conference terminal 104 and the remote conference terminal 106 decode the received coded stream of the synthesized image, and provide the synthesized image for a corresponding local display 105 and remote display 108 for display.

The foregoing describes example compositions of the example environments 100 and 200 and example communication processes in the example environments 100 and 200. It should be understood that embodiments of this application may be implemented in an environment different from the example environments 100 and 200. For example, the environment may include more conference terminals, or a process of synthesizing an image of a virtual environment may be implemented in a remote conference terminal.

### System architecture

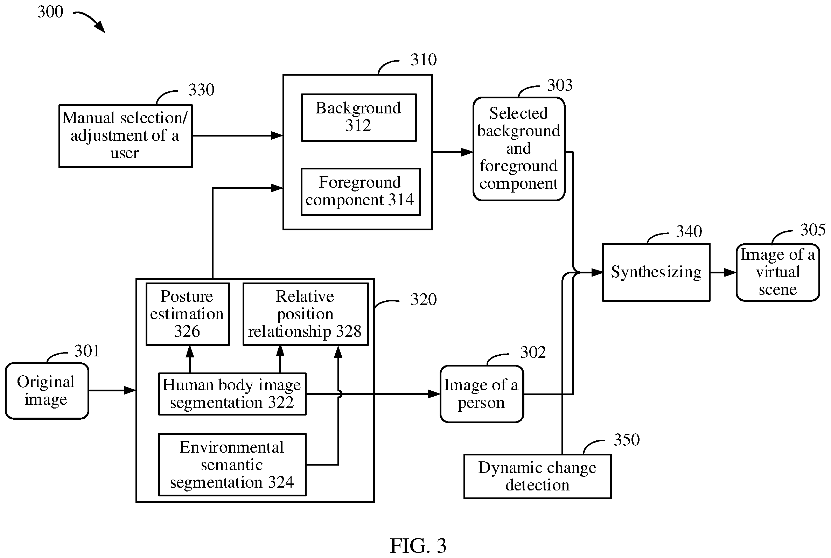

FIG. 3 is a schematic diagram of a system 300 for synthesizing a conference virtual scene according to some embodiments of this application. The system 300 may be implemented with reference to the local conference terminal 104 described in FIG. 1, or may be implemented with reference to the conference server 110 described in FIG. 2.

The system 300 includes a virtual scene resource library 310. The virtual scene resource library310 includes a background 312 and a foreground component 314. The background 312 and the foreground component 314 may be pre-configured, for example, designed by a user centered design (User Centered Design) personnel based on user experience. It is considered that a person may have a variety of postures, so that the foreground component includes a plurality of sizes. In some embodiments, an adjustable function may also be provided for a user to manually select or adjust a size of the foreground component 314 and the background 312 as needed.

The background 312 and the foreground component 314 may be associated and included in the virtual scene. In other words, one virtual scene may have the background 312 and the foreground component 314 associated with the background. In some embodiments, the foreground component 314 may be fixed or may be movable relative to the background 312. The background and foreground components of the same virtual scene can have a matching design style or color to achieve a good aesthetic effect. For example, a home virtual scene may include, for example, a common background of a bedroom or a living room, and include a foreground component such as a dining table or a sofa. For another example, a conference scene may include, for example, a background having a conference publicity slogan or a landmark building at a conference site, and a foreground component such as a podium or an office desk and chair. It should be understood that a form of the virtual scene is not limited in this embodiment of this application, and the virtual scene may be any scene in which a real world is simulated, or may be a scene that is completely virtually constructed.

Specifically, the background 312 may have a plurality of types of resolution, for example, 4K, 1080P, 720P, and 360P. The user can select, as actually needed, a background with an appropriate size based on an aesthetic effect or a delay of a conference. Additionally or alternatively, the background 312 may further include another background obtained by enlarging a part of one background, in other words, include a partial background having higher resolution. Additionally or alternatively, the background 312 may further include a background of a plurality of view angles for the same virtual scene, for example, top left, bottom left, top right, bottom right, or center, to simulate an effect of viewing from the plurality of view angles. Additionally or alternatively, the background 312 may further include a background obtained through extension on left and right sides of a background, and a global background that can be viewed from a larger view angle. The global background may be obtained by combining two or more backgrounds.

The foreground component 314 may include foreground objects of various sizes, colors, and shapes, for example, a sofa, a table and a chair, and a banner. In some embodiments, the foreground component 314 may have an attribute of a layer, in other words, when a plurality of foreground components and an image of the person overlap, which foreground component is displayed on the top and which foreground components are occluded. In some embodiments, the foreground component 314 may further include a static foreground component and a dynamic foreground component. A static foreground component (for example, furniture such as a sofa, a table, or a chair) has a specified size, while a size of a dynamic foreground component (for example, a banner) may be dynamically adjusted based on a situation.

The system 300 further includes an artificial intelligence (AI) module 320 that receives and processes an original image 301. The AI module 320 generally includes the following functional modules: a human body image segmentation module 322, an environmental semantic segmentation module 324, a posture estimation module 326, and a relative position relationship module 328. By using these modules, the system 300 may perform image segmentation on the original image 301 captured by a camera, and identify a position relationship (for example, in front of a table, behind a table, on the left of a table, or on the right of a table) between a person and an environmental object in an environment in the original image 301, and posture information of the person in the original image 301. By using recognition information, the appropriate background and the foreground component may be selected from the virtual scene resource library 310, and an image of the virtual scene may be synthesized according to a specific rule. The following provides brief descriptions.

The human body image segmentation module 322 is configured to extract an image 302 of the person from the original image 301 including the environmental object and the person. In some embodiments, the image 302 of the person may be an image obtained by cropping the image along a contour line of the person, which may be obtained by using, for example, a polygon fitting method. In addition, when the image 302 of the person is obtained through segmentation, an area occupied by the image 302 of the person in the original image 301, for example, coordinate information of each point of a corresponding fitted polygon, is further extracted. In some embodiments, the human body image segmentation module 322 may include a trained deep learning model, for example, a VGGNet, a ResNet, or a ModNet. A segmentation model may be selected based on hardware computing power and a delay requirement to process the original image 301. It should be understood that a specific implementation used to implement the human body segmentation model 312 is not limited in this embodiment of this application.

The environmental semantic segmentation module 324 is configured to perform semantic segmentation on the original image 301, to detect or recognize a position, a category, an occlusion relationship, and the like of the object in the environment. In some embodiments, environmental semantic segmentation may be further performed in advance. For example, semantic segmentation is performed on an image of an environment in which a person is not included, but is not necessarily performed on the original image 301. This is because usually the environment does not change greatly. Semantic segmentation needs to be performed once. Alternatively or additionally, the environmental semantic segmentation module 324 may also be set to run in the background for a long cycle (for example, once a day or once a week) to refresh a change of the environment. In some embodiments, the environmental semantic segmentation module 324may include a trained deep learning model, for example, a fully convolutional network (FCN), a semantic segmentation network (SegNet), or a graph convolutional network (GCN). A semantic segmentation model may be selected to process the original image or an environmental image based on hardware computing power and a delay requirement. It should be understood that a specific implementation of the environmental semantic segmentation module 314 is not limited in this embodiment of this application.

The posture estimation module 326 is configured to determine a posture of the person in the original image 301. The posture of the person may be further used to select the appropriate background and foreground component from the virtual scene resource library 310. In some embodiments, bone key points of a human body may be first detected from the original image 301 or the image of the person obtained through segmentation, and then the posture of the person is determined by detecting a combination of the bone key points and a position relationship or coordinate information between the bone key points.

As described above, a position of the environmental object and semantic information (for example, a sofa, a table, or a chair) of the environmental object are obtained by using the semantic segmentation module 324, and a position of the image of the person in the original image is obtained by using the human body segmentation module 322. To use the foreground component of the virtual scene to replace the environmental object, the position relationship between the person and the environment object needs to be obtained.

The relative position relationship module 328 is configured to determine a relative position relationship between the person and the environmental object in the original image 301. In some embodiments, the position relationship, for example, including, intersecting, or separating, between the person and the object in the original image 301 may be determined by using coordinate information of a fitted polygon of the person and coordinate information of a fitted polygon of the environmental object.

As shown in FIG. 3, the posture information that is of the person and that is detected by using the AI module, and the relative position relationship between the person and the environmental object may be used to select the background 312 and the foreground component 314 from the virtual scene resource library. A size of the selected foreground component may match the object (for example, occlusion or a support of the person) in the original image 301. Additionally or alternatively, the size of the selected foreground component may alternatively be proportional to a height of the person, to ensure coordination and aesthetics of the synthesized image.

In some embodiments, the user may alternatively select, based on a requirement or personal preference, the background and the foreground component 314 by using a manual selection/adjustment module 330.

Next, the selected background and foreground component 303 and the image 302 of the person obtained through segmentation may be provided for a synthesizing module 340, and the synthesizing module 340 generates a synthesized image 305 of the virtual scene. The synthesizing module 340 completes image synthesizing based on the image of the person, the selected background, the foreground component 303, and the position relationship.

The system 300 may further include a dynamic change detection module 350. The dynamic change detection module 350 is configured to process a problem caused by the user walking in a small range in the environment or a change of a view angle of the original image. For example, when the person walks in a conference and walks beyond a range of the foreground component, a problem synthesized image is generated. In a real scene, the human body is occluded, and the image of the person extracted from the original image 301 includes only an upper body. However, the foreground component in the synthesized image may not be large enough. As a result, the image of the person having the upper body is suspended in the air. In this case, a new foreground component may be added to achieve an effect of occlusion. Only a dynamic change caused by the person moving is listed herein. However, it should be understood that another type of dynamic change may be further included. More dynamic changes are described below, and corresponding methods are provided for processing.

### Synthesizing an image of a virtual scene

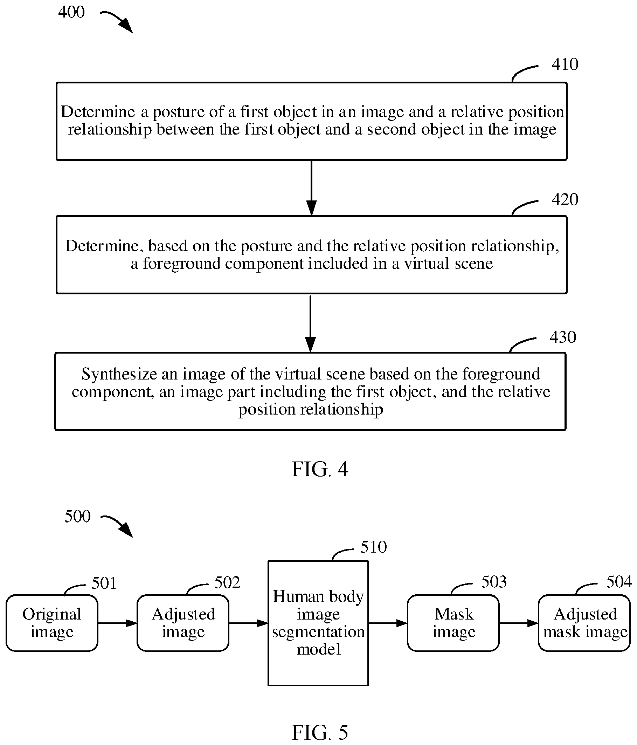

For better understanding of technologies in this application, an example method and process according to embodiments of this application are described with reference to FIG. 1 to FIG. 3. FIG. 4 shows an image processing method 400 according to some embodiments of this application. In the example environment 100 shown in FIG. 1, the method 400 may be performed by the local conference terminal 104 (a "conference terminal" for short) or the electronic device running the conference terminal 104. In the example environment 200 shown in FIG. 2, the method 400 may be performed by the conference server 110. In the following, an example in which the conference terminal 104 performs the method 400 is used to describe an exemplary process. However, it should be understood that a process in which the conference server 110 performs the method 400 is also similar, and a difference only lies in that an original image is obtained from the conference terminal 104 through a network.

In a block 410, the conference terminal 104 determines a posture of a first object in an image and a relative position relationship between the first object and a second object in the image. Herein, the image may be an image frame of a video stream captured by a camera. The first object may be a person or a virtual image (for example, in a cartoon form), and the second object may be a static object (for example, a sofa, a table, or a chair) in an environment. For ease of understanding and description, in the following, the first object is sometimes referred to as a person, and the second object is sometimes referred to as an object.

In some embodiments, before determining the posture and the relative position relationship, the conference terminal 104 may first extract an image part including the person from the image including the person and the object. Specifically, the conference terminal 104 may obtain, from a camera 102, a video stream including a series of image frames. Each image frame may be referred to as an original image. In a typical conference scene, the original image captured by the camera includes one or more persons and an environment in which the person is located. The environment includes a background and the object around a user. To protect personal privacy or for another purpose, the background and the foreground object are filtered out from the original image, and only the image part including the person is retained.

In some embodiments, a human body segmentation model is configured to extract the image part including the person. The image part including the person may be represented as an area of the image obtained by cropping the image along a contour line of the person in the original image. Additionally or alternatively, the image part including the person may also be represented as a rectangular or another shaped area including the person.

FIG. 5 is a schematic diagram of a process 500 of extracting an image part including a person according to some embodiments of this application. In some embodiments, a human body image segmentation model is configured to extract an image of the person. The human body image segmentation model 510 may be a trained deep learning model, for example, VGGNet, ResNet, or ModNet. An existing model may be used as the human body image segmentation model 510. Alternatively, based on the model structure described above, scene data may be recorded for a specific scene, and directional training optimization is performed, to achieve a better segmentation effect. The scope of this application is not limited herein.

To satisfy a high real-time requirement of a conference, a small-scale and low-delay segmentation model may be selected. Such a model usually has a smaller input and output size, for example, an image input into the model has smaller resolution. Therefore, a size of the original image 501 may be first adjusted to obtain an adjusted image 502 that matches an input size of the image segmentation model, and then the adjusted image 502 is input to the selected human body image segmentation model 510. In some embodiments, the size of the original image 501 may be reduced in a sampling manner.

Then, the human body image segmentation model 510 performs an inference operation based on the received reduced image 502, to generate a mask image 503 (also referred to as a mask). A mask image is a binary image used to divide a detected or segmented image into a target area or a non-target area. For example, in the target area (for example, the person), a pixel of the mask image may be represented as 1, and in the non-target area, a corresponding pixel may be represented as 0. By multiplying the original image and the mask image by pixel, the target area can be extracted from the original image.

It should be understood that a size of the mask image 503 generated by the human body image segmentation model 510 is the same as a size of the reduced image 502. Therefore, the size of the mask image 503 may be adjusted to match the original image 501, to obtain an adjusted mask image 504. In some embodiments, the size of the original image 301 may be adjusted in an interpolation manner. Then, the adjusted mask image 504 may be used to extract the image part including the person in the original image 501. For example, by multiplying the original image 501 and the mask image 504 by pixel, the image part including the person may be extracted from the original image.

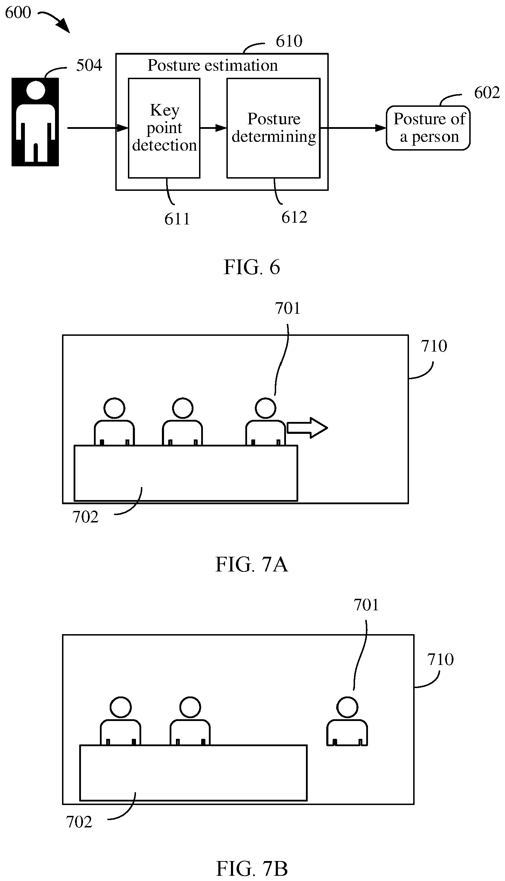

Next, a conference terminal 104 may determine a posture of the person based on the image part including the person. FIG. 6 is a schematic diagram of a process of determining a posture of a person. As described above, the posture of the person may be determined by detecting key points of a human body. In some embodiments, the key points may be obtained based on the mask image 504 (for example, a binary image) obtained in the process shown in FIG. 5.

As shown, the mask image 504 may be provided for a key point detection unit 611 of a posture estimation module 610. To avoid an error in human body segmentation, the mask image 504 may be slightly extended, and an extended rectangular box is used for key point detection 611. In addition, in addition to the matrix box, a fitted polygon may be further generated by using an image that is of the person and that is obtained through polygon fitting and segmentation. The fitted polygon may be used for bone point detection 611. The scope of this application is not limited herein. Alternatively, the posture of the person may be determined based on the extracted image of the person (with an original pixel value), and the posture of the person may not be determined based on the mask image.

In some embodiments, a typical COCO method including 17 key points may be used. Human body parts corresponding to the 17 key points include: 0: Nose; 1: Left eye; 2: Right eye; 3: Left ear; 4: Right ear; 5: Left shoulder; 6: Right shoulder; 7: Left elbow; 8: Right elbow; 9: Left wrist; 10: Right wrist; 11: Left hip; 12: Right hip; 13: Left knee; 14: Right knee; 15: Left ankle; and 16: Right ankle. It should be understood that a method for detecting bone points is not limited thereto, and another existing method or a method developed in the future may be used, for example, a posture detection method based on a neural network model MoveNet.

Next, the detected bone points are provided for a posture determining unit 612. The posture determining unit 612 may determine the posture of the person based on the detected key points. Specifically, the posture determining unit 612 may determine the posture 602 of the person based on a combination of the key points, for example, information such as which key points are detected and a phase position between these detected key points. Table 1 below shows an exemplary mapping of the combination of the key points to the posture of the person.

**Table 1**

| | |
|---|---|
| Combination of key points | Posture |
| Yes (left knee, right knee, left ankle, and right ankle) | Whole body |
| No (left knee, right knee, left ankle, and right ankle) | Half body |
| Distances between the left shoulder, left elbow, and left wrist are greater than a threshold. | Left single-hand support |
| Distances between the right shoulder, right elbow, and right wrist are greater than a threshold. | Right single-hand support |
| Distances between the left shoulder, left elbow, and left wrist and distances between the right shoulder, right elbow, and right wrist are all greater than a threshold. | Two-hand support |

To determine a relative position relationship between a person and an object, an area occupied by the person and the object in an original image 301 may be first determined. In some embodiments, the conference terminal 104 may determine an area of the person based on the mask image that is of the person and that is obtained by extracting an image part including the person. A polygon including the person can be constructed from the mask image through polygon fitting. The polygon can be a rectangle or a polygon with more edges. The polygon may be represented by using coordinate information of vertexes of the polygon.

An area in which the object is located may be determined by using the environmental semantic segmentation module 314. As described above, semantic segmentation for an environmental image may be executed in advance and run in the background for a long cycle (for example, once a day or once a week) to refresh a change of an environment. The environmental image may include a static object, but does not include a person or another movable object.

The environmental image is provided for the environmental semantic segmentation module 324. Correspondingly, the environmental semantic segmentation module 324 detects positions, categories, an occlusion relationship, and the like of various objects in the environmental image, to obtain an image obtained through semantic segmentation. The image obtained through semantic segmentation may include a mask image of the object and associated semantic information. Similar to image segmentation of the person, polygons including the object may be constructed from the mask image of the object, and these polygons may be represented by coordinate information of vertexes of the polygons.

Therefore, the area of the person and the area of the object that are represented by using the vertexes of the polygons are obtained. In some embodiments, the relative position relationship between the person and the object is determined based on the coordinate information of the polygons that represents the area occupied by the person and the coordinate information of the polygons that represents the area occupied by the object. The relative position relationship may include, for example, a spatial relationship (for example, a top-down, left-right relationship) between the person and the object, whether the person and the object are in contact or connected, or an occlusion relationship between the person and the object.

For example, the area of the object is represented as a polygon A (for example, a table, a chair, or a sofa obtained through semantic segmentation), and the area of the person is represented as a polygon B. The relative position relationship may be determined in the following manner.

First, a maximum value and a minimum value of horizontal coordinates of all vertices of the polygon A and the polygon B are determined, a left-right position relationship between the two polygons is determined, and a horizontal coordinate range of the polygon A is listed. Then, a maximum value and a minimum value of vertical coordinates of the polygon A and the polygon B are determined, an upper-down position relationship between the two polygons is determined, and a horizontal coordinate range of the polygon B is listed. If both horizontal coordinate ranges and vertical coordinate ranges of polygons A and B intersect, it is considered that the area of the object intersects with the area of the person. If the horizontal coordinate ranges and the vertical coordinate ranges of the polygons A and B are in a same inclusion relationship, it is considered that the area of the object and the area of the person are in an inclusion relationship. In another case, it is considered that the area of the object is separated from the area of the person.

In some embodiments, when the area of the object and the area of the person intersects or are in an inclusion relationship, the occlusion relationship between the object and the person may be determined by using a convex polygon analysis method. When an image of a virtual scene is synthesized, the occlusion relationship is used to determine display layers of a foreground component and the person. In this specification, the relative position relationship includes but is not limited to a spatial relationship between objects, whether the objects are in contact (to be specific, there is a supporting relationship), an occlusion relationship, and the like.

Still refer to FIG. 4. In a block 420, the conference terminal 104 determines, based on the posture and the relative position relationship, the foreground component included in the virtual scene.

A static background of the virtual scene may be determined by using a user selection or a system default manner. A position of the person in the determined background and the corresponding foreground component may be selected based on the relative position relationship and posture information of the person. Specifically, the foreground component is selected according to the following rule:

First, a size of the person to be synthesized in the virtual scene is adjusted based on a selected background replacement requirement. In some embodiments, a most appropriate size proportion range of a human body may be preset for the background of the virtual scene, to obtain a good visual effect. Next, if the posture of the person is a whole-body standing posture, the image of the person may be set in an unoccluded area in the background of the virtual scene. In this case, the foreground component can be selected or not. If the posture of the person is half standing, it means that a lower part of the person is occluded in the original image. In this case, the foreground component such as a sofa or a chair may be selected for occlusion. If the posture of the person is determined to be a half-body sitting posture, the foreground component such as a table may be selected for occlusion.

It should be noted that, if the posture of the person is determined to have a support, for example, a hand of the person is placed on an object, or depends on an object, the foreground component may be selected to replace the object in the original image.

In addition, when the foreground component is selected, in addition to a type of the foreground component, a size of the foreground component may also be considered, so that a ratio between the person and the foreground component is basically the same as that of the original image.

In some embodiments, sizes of the person and the foreground component in the target virtual scene may be adjusted based on a ratio of occlusion in front of the person to the person in the original image. A height Y1_org of the person obtained through segmentation is determined from the original image, and a horizontal coordinate width X1_org of an environmental object adjacent to the person in the original image is determined. Then, a longitudinal height Y2_target of the person in the target virtual scene is calculated. Based on the preceding three values and a requirement of a same ratio, namely, Y1_org/X1_org=Y2_target/X2_target, a width X2_target of the foreground component is determined and the foreground component is selected.

Still refer to FIG. 4. In a block 430, the conference terminal 104 synthesizes an image of the virtual scene based on the foreground component, the image part including the first object, and the relative position relationship. As described above, the first object may be a person. Specifically, the conference terminal 104 arranges the image of the person and the foreground component in the background of the virtual scene based on the determined position of the person in the background, the determined position of the foreground component, and the relative relationship between the foreground component and the person. In some embodiments, the position of the person and the foreground component in the background may be determined based on a recommended setting associated with the background, and the recommended setting indicates that a better visual effect may be brought when the person and the foreground component are in corresponding positions. Additionally or alternatively, the position of the person in the background may also be determined with reference to a position of the person in the original image, for example, based on a percentage along transverse space. For example, if the person in the original image is on the left side, the person in the synthesized image is also on the left side; or if the person in the original image is in the middle, the person in the original image is also in the middle. In this way, movement of the person can be tracked, and then the synthesized image can be dynamically adjusted.

In some embodiments, the foreground component and the image of the person may be superimposed based on the relative position relationship. For example, layers of the person and the foreground component are determined based on an occlusion relationship between the person and the object, so that the occlusion relationship between the person and the foreground component in the synthesized image of the virtual scene is consistent with that in the original image. For example, in the original image, the person sits on a sofa, and there is a table in front of the sofa, to be specific, the table occludes the person, and the person occludes the sofa. In this case, a selected layer of a foreground component corresponding to the sofa may be set below the person, and a layer a foreground component corresponding to the table may be set above the person.

### Dynamic adjustment of a synthesized image

During a video conference, a person may move in an environment, causing a change in a relative position relationship between the person and an object in the environment. However, in an image of a virtual scene, a relative position relationship between a selected foreground component and the person may not be consistent with that in an original scene. For example, the person is originally in a sitting posture behind a table and then moves to another seat. However, the original foreground component may not continue to occlude the person due to a smaller size, and a suspending half-body image without occlusion is also caused. For another example, in the original scene, the person is originally in a whole-body standing posture, and then walks to the back of a table and sits, that is, becoming a half-body sitting posture that is occluded. However, in the synthesized image, no foreground component is provided as occlusion.

Refer to FIG. 7A to FIG. 7C. FIG. 7A to FIG. 7C are a schematic diagram of a person moving in a virtual scene according to some embodiments of this application. FIG. 7A shows a synthesized image 710 of the virtual scene, where the person 701 is in a sitting posture and is occluded by a foreground component 702. During a video conference, the person 701 moves rightwards in the image 710. Accordingly, a position of the person 701 in the synthesized image 710 is updated, as shown in FIG. 7B. It can be learned that, because a length of the foreground component 702 is not enough, the person 701 moves outside the foreground component 702, and is not occluded or cannot be completely occluded.

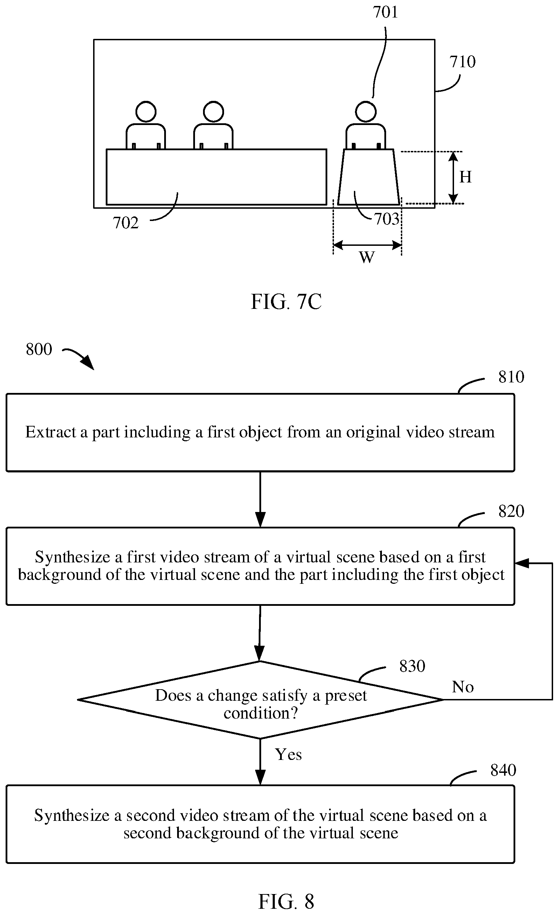

In some embodiments, a position of an image of the person in a background of the virtual scene may be updated, and whether an updated position of the person and a position of the foreground component still satisfy an original relative position relationship is determined. If the original relative position relationship is not satisfied, for example, the foreground component cannot completely occlude or can only partially occlude the person, another foreground component can be added. The another foreground component may be a dynamic foreground component described above, for example, a virtual animated character or a publicity board. Refer to FIG. 7C. A dynamic foreground component 703 is added below the person 701 as new occlusion. In the synthesized image 710, the dynamic foreground component 703 may move with the person 701.

In some embodiments, a position and size of the dynamic foreground component 703 may be determined based on a size and position of an image part including the person. For example, a width L 1 and a maximum horizontal width L2 of a lower edge of a segmented image of the person in the virtual scene may be calculated, and a width of the dynamic foreground component 703 is obtained through appropriately extension based on a maximum value of L2 and L1. In other words, a width W of the dynamic foreground component is greater than L 1 and L2. Then, a vertical coordinate Y1 of the lower edge and a vertical coordinate Y2 at a maximum horizontal width that are of the segmented image of the person in the virtual scene are obtained. A height of the dynamic virtual component 703 is determined based on Y1 and Y2 and coordinates Y3 (where the information may be stored in the background in advance, or obtained through semantic segmentation) of a ground in the background.

In some embodiments, in addition to adding the dynamic foreground component 703, a position of the foreground component 702 may be changed or a size of the foreground component 702 may be modified, so that a modified foreground component 702 can further occlude the person 701.

In some embodiments, the image of the person 701 may be further displayed in a close-up manner. In this manner, an upper body image of the person is enlarged and displayed, to avoid a half-body image that is not occluded in a video image.

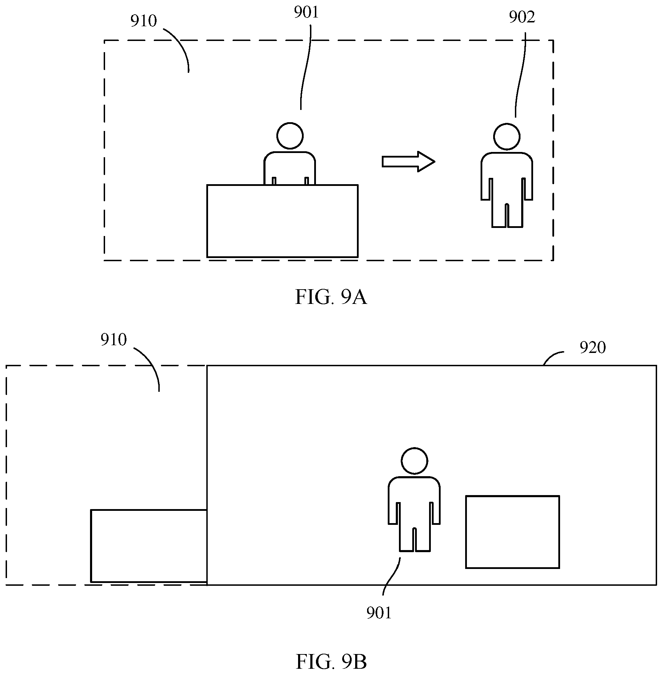

The foregoing discusses the operations on the foreground component when the person moves in the image of the virtual scene. Embodiments of this application further provide background processing when a person moves in a large range in a virtual scene or in a navigation scene. The following is described with reference to FIG. 8 and FIG. 9.

FIG. 8 is a schematic flowchart of another image processing method 800 according to some embodiments of this application. In the example environment 100 shown in FIG. 1, the method 800 may be performed by the local conference terminal 104 or the electronic device running the conference terminal 104. In the example environment 200 shown in FIG. 2, the method 800 may be performed by the conference server 110. In the following, an example in which the conference terminal 104 performs the method 400 is used to describe an exemplary process. However, it should be understood that a process in which the conference server 110 performs the method 400 is also similar, and a difference only lies in that an original video stream is obtained from the conference terminal 104 through a network.

In a block 810, the conference terminal 104 extracts an image part including a first object from the original video stream. The conference terminal 104 may extract, from an image of the video stream frame by frame, the image part including the first object. A specific implementation in which the conference terminal 104 extracts, from the image, the image part including the first object may be similar to the manner described with reference to FIG. 4. Details are not described herein again.

In a block 820, the conference terminal 104 synthesizes a first video stream of a virtual scene based on a first background of the virtual scene and the image part including the first object. The conference terminal 104 may synthesize an image of the virtual scene frame by frame, and generate the video stream on this basis. A specific implementation in which the conference terminal 104 synthesizes the image of the virtual scene may be the same as the manner described with reference to FIG. 4. Details are not described herein again.

Compared with the method 400 described in FIG. 4, the method 800 may detect and process a dynamic change of the person in the synthesized image. In a block 830, it is detected in the first video stream whether a change of the first object satisfies a preset condition. If the preset condition is satisfied, the method 800 proceeds to a block 840 in which a second video stream of the virtual scene is synthesized based on a second background of the virtual scene. If the preset condition is not satisfied, the block 820 is returned.

For various dynamic changes of the person, this embodiment of this application provides a plurality of processing manners. In some embodiments, extension of the background may be provided for a large-range movement of the person in the virtual scene, for example, when the person walks to an edge of a picture. As shown in FIG. 9A, in a image including a first background 910, a person moves from a roughly middle position 901 to a position 902 at an edge of the picture, which reduces user experience of an online video conference. In some embodiments, a change of a position of the person in a synthesized image of a virtual scene may be detected, and whether the position of the person is close to a boundary of the first background 910 may be determined. For example, whether the person in the background is close to the boundary is determined by using a maximum horizontal coordinate and a minimum horizontal coordinate of a segmented portrait in the background.

Refer to FIG. 9B. If it is determined that the person is close to the boundary of the first background 910, a second background 920 as extension of the first background 910 may be used as a new background. In other words, the background may continuously change for extension with movement of the person in the virtual scene, to achieve an effect that the background changes as the person moves, similar to that in a real world, and improve user experience.

It should be noted that if the synthesized image further includes one or more other persons, even if the background changes as the person moves, all the persons may be included in the background. In some embodiments, the conference terminal 104 may further determine whether another person in the synthesized image of the virtual scene can be included in the second background. If the another person cannot be included in the second background, a larger background can be used to include all the persons. The conference terminal 104 may use a third background obtained by combining the first background and the second background as a new background, to update the synthesized image. Combining the first background and the second background may include combining the first background and the second background in a splicing manner. Alternatively or additionally, the obtained background may also seem more harmonious and aesthetic in a splicing and cropping manner.

In a navigation scene, when a photographing angle of a camera that captures the original video stream changes, or a camera lens zooms in or zooms out, the obtained image of the person also changes accordingly. Therefore, the video stream of the synthesized virtual scene also needs to adapt to this dynamic change.

In some embodiments, the conference terminal 104 may detect that the photographing angle of the camera changes, and update the synthesized image of the virtual scene by using the second background that matches a changed photographing angle. In some embodiments, a foreground component may be further adjusted based on a change of a view angle, so that the foreground component is presented in a changed view angle. In this manner, the background of the virtual scene may also be dynamically changed to a background matching the view angle of the lens, in other words, the background may be changed to a picture "viewed" in a direction of a changed view angle, to achieve a visual effect as if the picture is viewed in a real scene, and improve user experience.

In some embodiments, in the navigation scene, a zoom-in lens may cause poor image quality of an enlarged background. Therefore, a background with higher resolution may be used. Therefore, the conference terminal 104 detects that the camera that captures the original video stream photographs in a close-up manner, which causes an image part of the person in the first video stream to become larger. In this case, the synthesized image of the virtual scene may be updated by using a local background with higher resolution. The conference terminal 104 may obtain, from a resource library, the second background that is used as a part of the first background, and synthesize a new image by using the second background, to implement an enlarged image with higher definition. In this way, a problem that image quality is poor after the background of the virtual scene is enlarged during close-up photographing of the camera can be alleviated or eliminated, to improve user experience.

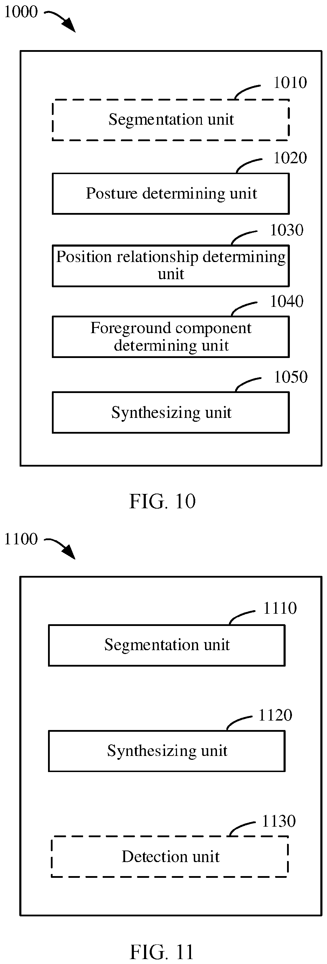

FIG. 10 is a schematic block diagram of an image processing apparatus 1000 according to an embodiment of this application. The apparatus 1000 includes a posture determining unit 1020, a position relationship determining unit 1030, a foreground component determining unit 1040, and a synthesizing unit 1050.

The posture determining unit 1020 is configured to determine a posture of a first object based on an image part including the first object. The position relationship determining unit 1030 is configured to determine a relative position relationship between the first object and a second object based on an area of the first object and an area of the second object. The foreground component determining unit 1040 is configured to determine a foreground component of a virtual scene based on the posture and the relative position relationship. The synthesizing unit 1050 is configured to synthesize an image of the virtual scene based on the foreground component, the image part including the person, and the relative position relationship.

In some embodiments, the apparatus 1000 may further include a segmentation unit 1010. The segmentation unit 1010 may be configured to extract, from an image including the first object and the second object, an image part including the first object. In some embodiments, the segmentation unit 1010 may further be configured to adjust a size of the image to match an input size of an image segmentation model; generate a mask image from an adjusted image by using the image segmentation model; adjust a size of the mask image to match the image including the first object and the second object; and extract the image part including the first object by using the adjusted mask image.

In some embodiments, the posture determining unit 1020 may be further configured to: detect a plurality of key points of the first object; and determine the posture of the first object based on a relative position between the plurality of key points.

In some embodiments, the apparatus 1000 may further include a semantic segmentation unit. The semantic segmentation unit may be configured to determine an area of the second object by performing semantic segmentation on an image that includes the second object but does not include the first object.

In some embodiments, the position relationship determining unit 1030 may be further configured to determine the relative position relationship between the first object and the second object based on coordinate information of the area of the first object and coordinate information of the area of the second object.

In some embodiments, the foreground component determining unit 1040 may be further configured to select, based on a relative size of the first object and the second object in the image, a foreground component whose size matches the first object in the virtual scene.

In some embodiments, the relative position relationship may further include an occlusion relationship between the first object and the second object. The synthesizing unit 1050 may be further configured to synthesize the image of the virtual scene by enabling the first object and the foreground component to satisfy the occlusion relationship.

In some embodiments, when a position of the first object in a background is updated, and an updated position of the first object and a position of the foreground component enable the first object and the foreground component not to satisfy the occlusion relationship, the synthesizing unit 1050 may be further configured to update the foreground component included in the virtual scene, and synthesize the image of the virtual scene based on an updated foreground component, the image part including the first object, and the relative position relationship. In some embodiments, the synthesizing unit 1050 may be further configured to add another foreground component to the image of the virtual scene, where the another foreground component and the first object satisfy the occlusion relationship. Alternatively or additionally, the synthesizing unit may be further configured to modify a size of the foreground component, so that a modified foreground component and the first object satisfy the occlusion relationship.

In some embodiments, when the position of the first object in the background is updated, and the updated position of the first object and the position of the foreground component enable the first object and the foreground component not to satisfy the occlusion relationship, the synthesizing unit 1050 may be further configured to indicate a camera that captures the image to photograph the first object in a close-up manner, and synthesize the image of the virtual scene based on the image part including the first object photographed in the close-up manner.

In some embodiments, when the position of the first object in the background is updated, and the updated position of the first object and the position of the foreground component enable the first object and the foreground component not to satisfy the occlusion relationship, the synthesizing unit 1050 may be further configured to adjust the position of the foreground component, to enable an adjusted foreground component and the first object to satisfy the occlusion relationship.

FIG. 11 is a schematic block diagram of another image processing apparatus 1100 according to an embodiment of this application.

The apparatus 1100 includes a segmentation unit 1110, a synthesizing unit 1120, and a detection unit 1130. The segmentation unit 1110 is configured to extract, from an original video stream, an image part including a first object. The synthesizing unit 1120 is configured to synthesize a first video stream of a virtual scene based on a first background of the virtual scene and the image part including the first object, and synthesize a second video stream of the virtual scene based on a second background of the virtual scene when a change of the first object in the first video stream satisfies a preset condition.

In some embodiments, the detection unit 1130 is configured to detect the change of the first object in the first video stream.

The detection unit 1130 may be configured to detect, in the first video stream, that a position of the first object is close to a boundary of the first background. Correspondingly, the synthesizing unit 1120 may be further configured to synthesize the second video stream based on the second background as extension of the first background. In some embodiments, the detection unit 1130 may be further configured to detect that another object in the first video stream cannot be included in the second background. The synthesizing unit 1120 may be further configured to synthesize the second video stream based on a third background obtained by combining the first background and the second background. In some embodiments, combining the first background and the second background may include combining the first background and the second background in a splicing manner. Alternatively or additionally, a spliced background may be further cropped in an appropriate size, so that the obtained background seems more harmonious and aesthetic.

In some embodiments, the detection unit 1130 may be further configured to determine that a photographing angle of a camera that captures the original video stream changes, where the change of the photographing angle causes the change of the first object in the first video stream. The synthesizing unit 1120 may be further configured to synthesize the second video stream by using the second background that matches a changed photographing angle.

In some embodiments, the detection unit 1130 may be further configured to determine that the camera that captures the original video stream photographs the first object in a close-up manner. The first object in the first video stream becomes larger because the first object is photographed in the close-up manner. The synthesizing unit 1120 may be configured to synthesize the second video stream based on the second background, where the second background is a part of the first background and has resolution higher than that of the first background.

It can be learned from the foregoing descriptions with reference to FIG. 1 to FIG. 11 that, in embodiments of this application, positions of a person, a background, and a foreground component can be adaptively adjusted in a virtual scene by detecting a posture of the person and a position relationship between the person and an environmental object in an original image, to better fuse the person into a virtual background. Compared with an existing solution in which only the background is replaced, embodiments of this application provide a virtual scene mode in which a static background and the foreground component are combined. It is considered that a color and layout of an overall environment in the combination, and the foreground component can provide a plurality of types of sizes to satisfy requirements of a human body segmentation state and posture. In this manner, the foreground component is introduced to construct a relationship between a person and a surrounding environment object in an original scene, so that a synthesized image of the virtual scene is more realistic, to improve user experience.

### Example apparatus and device

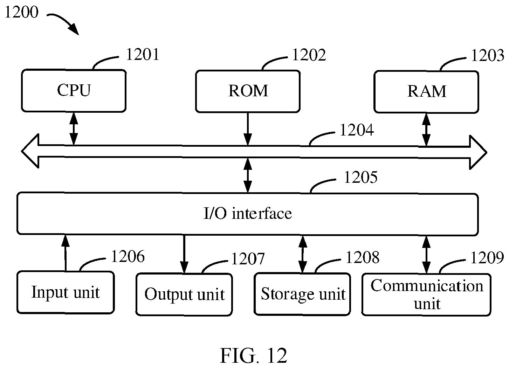

FIG. 12 is a schematic block diagram of an example device 1200 that may be used to implement an embodiment of this application. The device 1200 may be configured to implement the local conference terminal 104, the remote conference terminal 106, and the conference server 110 shown in FIG. 1 and FIG. 2. As shown in the figure, the device 1200 includes a central processing unit (CPU) 1201 that may perform various appropriate actions and processing based on computer program instructions stored in a read-only memory (ROM) 1202 or loaded from a storage unit 1208 into a random access memory (RAM) 1203. The RAM 1203 may further store various programs and data needed for an operation of the device 1200. The CPU 1201, the ROM 1202, and the RAM 1203 are connected to each other through a bus 1204. An input/output (I/O) interface 125 is also connected to the bus 1204.

A plurality of components in the device 1200 are connected to the I/O interface 1205, and include: an input unit 1206, for example, a keyboard or a mouse; an output unit 1207, for example, various types of displays or speakers; a storage unit 1208, for example, a magnetic disk or an optical disc; and a communication unit 1209, for example, a network interface card, a modem, or a wireless communication transceiver. The communication unit 1209 allows the device 1200 to exchange information/data with another device by using a computer network such as the Internet and/or various telecommunications networks.

The processes and processing described above, such as the method 400 and/or the method 800, may be performed by the processing unit 1201. For example, in some embodiments, the method 400 and/or 800 may be implemented as a computer software program, which is tangibly included in a machine readable medium, for example, the storage unit 1208. In some embodiments, a part or all of a computer program may be loaded and/or installed on the device 1200 by using the ROM 1202 and/or the communication unit 1209. When the computer program is loaded into the RAM 1203 and executed by the CPU 1201, one or more actions of the method 400 and/or the method 800 described above may be performed.

This application may be a method, an apparatus, a system, and/or a computer program product. The computer program product may include a computer-readable storage medium containing computer-readable program instructions for performing various aspects of this application.

The computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (a non-exhaustive list) of the computer-readable storage media include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coded device such as a punched card or a groove protrusion structure storing instructions on the punched card or the groove protrusion structure, and any suitable combination of the foregoing. The computer-readable storage medium used herein is not to be construed as a transient signal, such as a radio wave or another freely propagating electromagnetic wave, an electromagnetic wave propagating through a waveguide or another transmission medium (such as a light pulse through an optical fiber), or an electrical signal transmitted through a wire.

The computer-readable program instructions described herein may be downloaded from the computer-readable storage medium to respective computing/processing devices or to an external computer or external storage device through a network such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives the computer-readable program instructions from the network, and forwards the computer-readable program instructions for storage in the computer-readable storage medium in each computing/processing device.

The computer program instructions used to perform operations in this application may be an assembly instruction, an instruction set architecture (ISA) instruction, a machine instruction, a machine-related instruction, microcode, a firmware instruction, status setting data, or source code or target code written in any combination of one or more programming languages. The programming languages include an object-oriented programming language such as Smalltalk and C++, and a conventional procedural programming language such as a "C" language or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer through any type of network, including a local area network (LAN) or a wide area network (WAN), or may be connected to an external computer (for example, connected by using an Internet service provider through the Internet). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, to implement the various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by the computer-readable program instructions.

The computer-readable program instructions may be provided for a processing unit of a general-purpose computer, a dedicated computer, or another programmable data processing apparatus to produce a machine, so that the instructions, when executed by the processing unit of the computer or the another programmable data processing apparatus, create an apparatus for implementing functions/actions specified in one or more blocks in the flowcharts and/or block diagrams. Alternatively, the computer-readable program instructions may be stored in a computer-readable storage medium. The instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, the computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks in the flowcharts and/or the block diagrams.

The flowcharts and block diagrams in the accompanying drawings show the system architecture, function, and operation of possible implementations of systems, methods, and computer program products according to various embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved. It should also be noted that each block in the block diagrams and/or flowcharts, and the combination of the blocks in the block diagrams and/or flowcharts may be implemented by a special-purpose hardware-based system that performs a specified function or act, or may be implemented by a combination of special-purpose hardware and computer instructions.

The foregoing has described the implementations of this application. The foregoing descriptions are examples, are not exhaustive, and are not limited to the disclosed implementations. Many modifications and variations are apparent to a person of ordinary skill in the art without departing from the scope and spirit of the described implementations. The selection of terms used herein is intended to best explain the principles, practical application, or improvement to technologies in the market of the implementations, or to enable another person of ordinary skill in the art to understand the implementations disclosed herein.

## Claims

1. An image synthesizing method, wherein the method comprises:
determining a posture of a first object in an image and a relative position relationship between the first object and a second object in the image;
determining, based on the posture and the relative position relationship, a foreground component comprised in a virtual scene; and
synthesizing an image of the virtual scene based on the foreground component, an image part comprising the first object, and the relative position relationship.

2. The method according to claim 1, wherein the method further comprises:
determining an area of the second object in the image by performing semantic segmentation on an image that comprises the second object but does not comprise the first object.

3. The method according to claim 2, wherein the determining a relative position relationship between the first object and a second object comprises:
determining the relative position relationship between the first object and the second object based on coordinate information of an area of the first object in the image and coordinate information of the area of the second object in the image.

4. The method according to claim 1, wherein the determining a foreground component comprised in a virtual scene comprises:
selecting, based on a relative size of the first object and the second object in the image, the foreground component whose size matches the first object.

5. The method according to claim 1, wherein the relative position relationship comprises an occlusion relationship between the first object and the second object, and the synthesizing an image of the virtual scene comprises:
synthesizing the image of the virtual scene, wherein the first object and the foreground component satisfy the occlusion relationship in the synthesized image of the virtual scene.

6. The method according to claim 5, wherein
when a position of the first object in a background is updated, and an updated position of the first object and a position of the foreground component enable the first object and the foreground component not to satisfy the occlusion relationship,
updating the foreground component comprised in the virtual scene, and
synthesizing the image of the virtual scene based on an updated foreground component, the image part comprising the first object, and the relative position relationship.

7. The method according to claim 5, wherein
when a position of the first object in a background is updated, and an updated position of the first object and a position of the foreground component enable the first object and the foreground component not to satisfy the occlusion relationship,
indicating a camera that captures the image to photograph the first object in a close-up manner, and
synthesizing the image of the virtual scene based on the image part comprising the first object photographed in the close-up manner.

8. The method according to claim 5, wherein
when a position of the first object in a background is updated, and an updated position of the first object and a position of the foreground component enable the first object and the foreground component not to satisfy the occlusion relationship,
adjusting the position of the foreground component, to enable an adjusted foreground component and the first object to satisfy the occlusion relationship.

9. The method according to any one of claims 1 to 8, wherein the first object is a person or a virtual image, and the second object is a static object.

10. An image synthesizing method, wherein the method comprises:
extracting an image part comprising a first object from an original video stream;
synthesizing a first video stream of a virtual scene based on a first background of the virtual scene and the image part comprising the first object; and
when a change of the first object in the first video stream satisfies a preset condition, synthesizing a second video stream of the virtual scene based on a second background of the virtual scene.

11. The method according to claim 10, wherein the synthesizing a second video stream of the virtual scene based on a second background of the virtual scene in response to a case in which a change of the first object in the first video stream satisfies a preset condition comprises:
synthesizing the second video stream based on the second background as extension of the first background when it is detected in the first video stream that a position of the first object is close to a boundary of the first background.

12. The method according to claim 10, wherein the method further comprises:
when it is determined that another object in the first video stream cannot be comprised in the second background, synthesizing the second video stream based on a third background obtained by combining the first background and the second background.

13. The method according to claim 10, wherein the synthesizing a second video stream of the virtual scene based on a second background of the virtual scene in response to a case in which a change of the first object in the first video stream satisfies a preset condition comprises:
synthesizing the second video stream by using the second background that matches a changed photographing angle, when a photographing angle of a camera that captures the original video stream changes and a change of the first object in the first video stream is caused.

14. The method according to claim 10, wherein the synthesizing a second video stream of the virtual scene based on a second background of the virtual scene in response to a case in which a change of the first object in the first video stream satisfies a preset condition comprises:
synthesizing the second video stream based on the second background when a camera that captures the original video stream photographs the first object in a close-up manner and that the first object in the first video stream becomes larger is caused, wherein the second background is a part of the first background and has resolution higher than that of the first background.

15. An image synthesizing apparatus, wherein the apparatus comprises:
a posture determining unit, configured to determine a posture of a first object in an image;
a position relationship determining unit, configured to determine a relative position relationship between the first object and a second object in the image;
a foreground component determining unit, configured to determine, based on the posture and the relative position relationship, a foreground component comprised in a virtual scene; and
a synthesizing unit, configured to synthesize an image of the virtual scene based on the foreground component, an image part comprising the first object, and the relative position relationship.

16. The apparatus according to claim 15, wherein the apparatus further comprises:
a semantic segmentation unit, configured to determine an area of the second object in the image by performing semantic segmentation on an image that comprises the second object but does not comprise the first object.

17. The apparatus according to claim 15, wherein the position relationship determining unit is further configured to:
determine the relative position relationship between the first object and the second object based on coordinate information of an area of the first object in the image and coordinate information of the area of the second object in the image.

18. The apparatus according to claim 15, wherein the foreground component determining unit is further configured to:
select, based on a relative size of the first object and the second object in the image, the foreground component whose size matches the first object.

19. The apparatus according to claim 15, wherein the relative position relationship comprises an occlusion relationship between the first object and the second object, and the synthesizing unit is further configured to:
synthesize the image of the virtual scene, wherein the first object and the foreground component satisfy the occlusion relationship in the synthesized image of the virtual scene.

20. The apparatus according to claim 19, wherein the synthesizing unit is further configured to:
when a position of the first object in a background is updated, and an updated position of the first object and a position of the foreground component enable the first object and the foreground component not to satisfy the occlusion relationship,
update the foreground component comprised in the virtual scene, and
synthesize the image of the virtual scene based on an updated foreground component, the image part comprising the first object, and the relative position relationship.

21. The apparatus according to claim 19, wherein the synthesizing unit is further configured to:
when a position of the first object in a background is updated, and an updated position of the first object and a position of the foreground component enable the first object and the foreground component not to satisfy the occlusion relationship,
indicate a camera that captures the image to photograph the first object in a close-up manner, and
synthesize the image of the virtual scene based on the image part comprising the first object photographed in the close-up manner.

22. The apparatus according to claim 19, wherein the synthesizing unit is further configured to:
when a position of the first object in a background is updated, and an updated position of the first object and a position of the foreground component enable the first object and the foreground component not to satisfy the occlusion relationship,
adjust the position of the foreground component, to enable an adjusted foreground component and the first object to satisfy the occlusion relationship.

23. The apparatus according to any one of claims 15 to 22, wherein the first object is a person or a virtual image, and the second object is a static object.

24. An image synthesizing apparatus, wherein the apparatus comprises:
a segmentation unit, configured to extract, from an original video stream, an image part comprising a first object; and
a synthesizing unit, configured to:
synthesize a first video stream of a virtual scene based on a first background of the virtual scene and the image part comprising the first object, and
when a change of the first object in the first video stream satisfies a preset condition, synthesize a second video stream of the virtual scene based on a second background of the virtual scene.

25. The apparatus according to claim 24, further comprising:
a detection unit, configured to detect, in the first video stream, that a position of the first object is close to a boundary of the first background, wherein
the synthesizing unit is further configured to synthesize the second video stream based on the second background as extension of the first background.

26. The apparatus according to claim 25, wherein
the detection unit is further configured to determine that another object in the first video stream cannot be comprised in the second background; and
the synthesizing unit is further configured to synthesize the second video stream based on a third background obtained by combining the first background and the second background.

27. The apparatus according to claim 24, further comprising:
a detection unit, configured to determine that a photographing angle of a camera that captures the original video stream changes, wherein the change of the photographing angle causes a change of the first object in the first video stream, wherein
the synthesizing unit is configured to synthesize the second video stream by using the second background that matches a changed photographing angle.

28. The apparatus according to claim 24, further comprising:
a detection unit, configured to determine that a camera that captures the original video stream photographs the first object in a close-up manner, wherein photographing in the close-up manner causes the first object in the first video stream to become larger, and
the synthesizing unit is configured to synthesize the second video stream based on the second background, wherein the second background is a part of the first background and has higher resolution than that of the first background.

29. An electronic device, comprising:
a processing unit and a memory, wherein
the processing unit executes instructions in the memory, to enable the electronic device to perform the method according to any one of claims 1 to 9 or any one of claims 10 to 14.

30. A computer-readable storage medium, wherein the computer-readable storage medium stores one or more computer instructions, and the one or more computer instructions are executed by a processor to enable the processor to perform the method according to any one of claims 1 to 9 or any one of claims 10 to 14.

31. A computer program product, comprising machine executable instructions, wherein when the machine executable instructions are executed by a device, the device is enabled to perform the method according to any one of claims 1 to 9 or any one of claims 10 to 14.
